(19) Europäisches Patentamt
European Patent Office
Office européen des brevets

(11) **EP 1 342 153 B1**

(12) **EUROPÄISCHE PATENTSCHRIFT**

(45) Veröffentlichungstag und Bekanntmachung des Hinweises auf die Patenterteilung:
**07.06.2006 Patentblatt 2006/23**

(21) Anmeldenummer: **01967345.8**

(22) Anmeldetag: **14.09.2001**

(51) Int Cl.:
**G06F 7/58** (2006.01)

(86) Internationale Anmeldenummer:
**PCT/EP2001/010650**

(87) Internationale Veröffentlichungsnummer:
**WO 2002/046912 (13.06.2002 Gazette 2002/24)**

(54) **VERFAHREN UND VORRICHTUNG ZUM ERZEUGEN EINER PSEUDOZUFALLSFOLGE MITTELS DISKRETEM LOGARITHMUS**

METHOD AND DEVICE FOR GENERATING A PSEUDO RANDOM SEQUENCE USING A DISCRETE LOGARITHM

PROCEDE ET DISPOSITIF POUR PRODUIRE UNE SEQUENCE PSEUDO-ALEATOIRE AU MOYEN D'UN LOGARITHME DISCRET

(84) Benannte Vertragsstaaten:
**AT BE CH CY DE DK ES FI FR GB GR IE IT LI LU MC NL PT SE TR**

(30) Priorität: **08.12.2000 DE 10061315**

(43) Veröffentlichungstag der Anmeldung:
**10.09.2003 Patentblatt 2003/37**

(73) Patentinhaber:
• **Deutsche Telekom AG**
  **53113 Bonn (DE)**
• **DeTeMobil**
  **Deutsche Telekom MobilNet GmbH**
  **53227 Bonn (DE)**

(72) Erfinder:
• **HUBER, Klaus**
  **64283 Darmstadt (DE)**
• **HEISTER, Ulrich**
  **64807 Dieburg (DE)**
• **SCHAEFER-LORINSER, Frank**
  **64372 Ober-Ramstadt (DE)**
• **MARTIN, Tobias**
  **35466 Rabenau (DE)**
• **BREITBACH, Thomas**
  **56645 Nickenich (DE)**

(56) Entgegenhaltungen:
**EP-A- 0 616 429        WO-A-99/22484**
**US-A- 6 098 192**

• **LONG D L ET AL: "THE DISCRETE LOGARITHM HIDES O(LOG N) BITS" SIAM JOURNAL ON COMPUTING, SOCIETY FOR INDUSTRIAL AND APPLIED MATHEMATICS, US, Bd. 17, Nr. 2, April 1988 (1988-04), Seiten 363-372, XP002901485 ISSN: 0097-5397**

EP 1 342 153 B1

**EP 1 342 153 B1**

**Beschreibung**

Die Erfindung beschreibt ein Verfahren zum Erzeugen einer Pseudozufallsfolge gemäß Oberbegriff des Anspruchs 1 sowie von einer Vorrichtung zum Erzeugen einer Pseudozufallsfolge gemäß Oberbegriff des Anspruchs 12.

Bei der Erzeugung von Zufallsfolgen werden grundsätzlich zwei Varianten unterschieden. Echte Zufallsfolgen werden auf Grundlage von physikalischen Effekten, zum Beispiel durch den radioaktiven Zerfall, erzeugt. Diese echten Zufallsfolgen können insbesondere in der Kryptographie Verwendung finden. Bei der anderen Variante werden Pseudozufallsfolgen mit einer auch als (Pseudo)zufallsgenerator bezeichneten Einrichtung erzeugt. Diese Einrichtung kann beispielsweise durch einen Computer gebildet werden, in dem ein Algorithmus abgearbeitet wird. Neben dieser softwaremäßigen Realisierung können Pseudozufallsfolgen auch mit in Hardware vorliegenden Schieberegistern erzeugt werden, die zumeist linear-rückgekoppelt sind. Der grundsätzliche Unterschied zwischen den Pseudozufallsfolgen und den echten Zufallsfolgen kann also darin gesehen werden, dass unter Kenntnis der Schaltungsanordnung beziehungsweise des Algorithmus eine Wiederholung beziehungsweise Wiederherstellung derselben Pseudozufallsfolge möglich ist.

Ein gattungsgemäßes Verfahren und eine Schaltungsanordnung zum Erzeugen einer Pseudozufallsfolge sind aus der EP 0 616 429 AI bekannt. Diese Schaltungsanordnung ist mit einem rückgekoppelten Schieberegister realisiert, bei dem mehrere in Reihe liegende Speicherzellen (Flip-Flops) vorgesehen sind. Zumindest zwei Ausgangswerte von unterschiedlichen Speicherzellen werden abgegriffen und in einer Verknüpfungseinrichtung miteinander verknüpft. Das Verknüpfungsergebnis wird auf den Eingang des Schieberegisters zurückgeführt. Selbstverständlich sind mehrere Rückkoppelzweige einsetzbar. Die Verknüpfung der beiden Ausgangswerte der zwei Speicherzellen erfolgt bei dem bekannten Verfahren beziehungsweise bei der bekannten Schaltungsanordnung durch eine Modulo 2 Addition, die mittels eines Exklusiv-Oder-Gatters ausgeführt wird. Verwendung findet das bekannte Verfahren beziehungsweise die bekannte Schaltungsanordnung beispielsweise bei der sogenannten Stromchiffrierung. Des weiteren ist aus der WO 99/22484 ein Verfahren und eine Vorrichtung zur Erzeugung von Verschlüsselungszahlenfolgen bekannt. Dabei werden eine Wiederholungsbeziehung und eine Ausgangsgleichung derart ausgewählt, dass weder für die Wiederholungsbeziehung noch für die Ausgangsgleichung zweimal dasselbe Paar von Elementen aus einem Schieberegister verwendet wird. Ferner werden in der US 6,098,192 eine Vorrichtung und ein Verfahren aufgezeigt, um den Logarithmus eines Elements mit weniger Aufwand zu bestimmen, als dies eine Verwendung von fest vorgegebenen Nachschlagetabellen erfordern würde. Schließlich wird aus dem Dokument Long D.L. et al., "The Discrete Logarithm Hides O(Log N) Bits", Siam Journal on Computing, Society for Industrial and Applied Mathematics, US, Bd. 17, Nr. 2, April 1988 (1988-04), Seiten 363-372, XP002901485, ISSN: 0097-5397 bekannt, wie sogenannte Einweg-Funktionen evaluiert werden können und wie sich aus einer verschlüsselten Information zumindest Teile der unverschlüsselten Information rekonstruieren lassen.

Aufgabe der Erfindung ist es, eine weitere Möglichkeit zur Erzeugung einer Pseudozufallsfolge anzugeben, die Rückschlüsse von der verschlüsselten Information auf die unverschlüsselte Information erschwert und zudem einfach zu implementieren ist.

Gelöst wird diese Aufgabe mit einem Verfahren zum Erzeugen einer Pseudozufallsfolge, das die in Anspruch 1 genannten Merkmale aufweist. Bei einem hardwaremäßig oder softwaremäßig realisierbaren Schieberegister mit mehreren in Reihe liegenden Speicherzellen werden die Elemente der Pseudozufallsfolge durch das Schieberegister geschoben. Von zumindest zwei Schieberegisterstufen werden die Ausgangswerte miteinander verknüpft. Das Verknüpfungsergebnis kann auf den Eingang einer der Schieberegisterstufen der Schieberegisterkette gekoppelt werden. Erfindungsgemäß zeichnet sich das Verfahren dadurch aus, dass die Elemente der Pseudozufallsfolge diskret logarithmiert werden. Dadurch ergibt sich gegenüber dem bekannten Verfahren eine neue Pseudozufallsfolge. Diskret logarithmiert bedeutet, dass nicht die Pseudozufallsfolge als Ganzes logarithmiert wird, sondern die einzelnen Elemente der Pseudozufallsfolge. Es kann dabei vorgesehen sein, dass zwei Elemente der Pseudozufallsfolge miteinander durch die Logarithmierung verknüpft werden.

Bei einem besonders bevorzugten Ausführungsbeispiel wird modifiziert diskret logarithmiert. Da der Logarithmus an der Stelle Null nicht definiert ist, wird -sofern der Wert Null von einem Element angenommen wird- nicht die Logarithmierung durchgeführt, sondern es wird dann ein vorgebbarer Wert festgesetzt.

Bei einem bevorzugten Ausführungsbeispiel wird die diskrete Logarithmierung bereits bei dem Verknüpfen der Ausgangswerte der Schieberegisterstufen durchgeführt. Grundsätzlich wäre es jedoch auch denkbar, zuerst die Pseudozufallsfolge zu erzeugen und anschließend am Ausgang der Schieberegisterkette die diskrete Logarithmierung durchzuführen, wie dies vorstehend beschrieben ist. Selbstverständlich ist es möglich, die diskrete Logarithmierung mehrfach durchzuführen. Dadurch können wiederum andere Pseudozufallsfolgen erzeugt werden.

Bei einem bevorzugten Ausführungsbeispiel ist vorgesehen, dass anhand einer Ausgangs- und Ergebniswerte umfassenden Logarithmustabelle diskret logarithmiert wird. Das heißt, dass der Ausgangswert einer Speicherzelle mit den Werten der Logarithmustabelle verglichen wird, das zu dem Ausgangswert passende Ergebnis ausgewählt wird und dieses als Verknüpfungsergebnis an einen Eingang einer Speicherzelle weitergegeben wird.

Bei einem Ausführungsbeispiel ist vorgesehen, dass einer der miteinander zu verknüpfenden Ausgangswerte vor dieser Verknüpfung, also vor der diskreten Logarithmierung, mit einem vorgebbaren Wert vorverknüpft wird. Insbesondere ist für diese Vorverknüpfung eine logische Verknüpfung, vorzugsweise eine Addition, vorgesehen. Wird also bei der Addition der Ausgangswert des Schieberegisters mit einer Null verknüpft, ist der Rückkoppelzweig somit eingeschaltet beziehungsweise aktiv, da immer der Ausgangswert des Schieberegisters weitergegeben wird. Wird der Ausgangswert des Schieberegisters mit einer Eins verknüpft, könnte der Rückkoppelzweig dadurch abgeschaltet werden. Selbstverständlich sind für die Vorverknüpfung auch andere, von Null oder Eins verschiedene vorgebbare Werte verwendbar.

Bei einem Ausführungsbeispiel kann vorgesehen sein, dass anhand einer Ausgangs- und Ergebniswerte umfassenden Vorverknüpfungstabelle oder mittels Logikschaltungen die Vorverknüpfung durchgeführt wird.

Ein bevorzugtes Ausführungsbeispiel zeichnet sich dadurch aus, dass die diskrete Logarithmierung mit Hilfe des sogenannten Zech- beziehungsweise Jacobi-logarithmus ausgeführt wird. Wird die diskrete Logarithmierung anhand der vorstehend erwähnten Tabelle durchgeführt, sind die Ergebniswerte in dieser Tabelle mittels des Zech- beziehungsweise Jacobilogarithmus ermittelt. Die Logarithmustabelle basiert also auf den an sich bekannten Zech- beziehungsweise Jacobilogarithmen.

Ein besonders bevorzugtes Ausführungsbeispiel zeichnet sich dadurch aus, dass die Rückkopplung so erfolgt, dass eine Pseudozufallsfolge mit maximaler Periodenlänge gebildet wird. Das heißt, dass der zumindest eine Rückkoppelzweig an bestimmten Ausgängen der Schieberegisterstufen vorgesehen wird. Für die Ermittlung der Rückkoppelanschlüsse beziehungsweise des Rückkoppelzweigs, die die maximale Periodenlänge der Pseudozufallsfolge liefern, sind Tabellen in der einschlägigen Literatur (beispielsweise W. Peterson, E. Weldon , Error-Correcting Codes, second Edition, MIT Press, Cambridge, seventh printing 1984 oder R. Lidl, H. Niederreiter, Finite Fields, Cambridge University Press 1984) bekannt.

Die vorstehend erwähnte Aufgabe wird auch mit einer Vorrichtung zum Erzeugen einer Pseudozufallsfolge gelöst, die die Merkmale des Anspruchs 12 aufweist. Diese Vorrichtung umfasst mehrere in Reihe geschaltete Speicherzellen, die ein Schieberregister bilden. Ferner ist ein Rückkoppelzweig vorgesehen, der zwei unterschiedliche Registerausgänge mit einem Registereingang verbindet. Außerdem ist ein Verknüpfungselement für die Ausgangswerte der Registerstufen vorgesehen, welches eingangsseitig mit den Registerausgängen und ausgangsseitig mit dem Registereingang verbunden ist. Erfindungsgemäß zeichnet sich die Vorrichtung durch ein Element für die diskrete Logarithmierung der Elemente der Pseudozufallsfolge aus. Somit wird mit der erfindungsgemäßen Vorrichtung eine weitere Quelle für die Erzeugung von Pseudozufallsfolgen realisiert, die Pseudozufallsfolgen liefert, die gegenüber den aus dem Stand der Technik bekannten Zufallsfolgen unterschiedlich sind.

Bevorzugt wird ein Ausführungsbeispiel, bei dem das Element für die diskrete Logarithmierung im Rückkoppelzweig liegt und das Verknüpfungselement bildet, welches die Ausgangswerte der Register diskret logarithmiert. Alternativ kann jedoch auch vorgesehen sein, dass das Element für die diskrete Logarithmierung am Ende der Schieberegisterkette angeordnet ist, wie dies vorstehend im Zusammenhang mit dem erfindungsgemäßen Verfahren erläutert ist.

Bevorzugt wird ein Ausführungsbeispiel, bei dem das Element ein Speicherelement ist, in dem eine Ausgangs- und Ergebniswerte umfassende Logarithmustabelle abgelegt ist. Alternativ kann das Element auch durch Logikbausteine, also in Hardware, realisiert werden.

Bei einem Ausführungsbeispiel ist vorgesehen, dass zwischen einem der Registerausgänge und dem Verknüpfungselement ein Vorverknüpfungselement liegt, dessen einer Eingang mit diesem Registerausgang, dessen anderer Eingang mit einem vorgebbaren Wert beaufschlagbar ist und dessen Ausgang mit dem Eingang des Verknüpfungselements verbunden ist. Damit ist es denkbar, den Rückkoppelzweig beziehungsweise mehrere Rückkoppelzweige ein- und auszuschalten, also zu aktivieren oder zu deaktivieren.

Das Vorverknüpfungselement kann eine logische Schaltung, insbesondere ein Exklusiv-Oder-Gatter, sein. Das Vorverknüpfungselement kann in einer alternativen Ausführungsform jedoch ebenfalls durch ein Speicherelement realisiert werden, in dem die Vorverknüpfungsergebnisse in Abhängigkeit der Eingangswerte abgelegt sind.

Weitere Ausgestaltungen ergeben sich aus den Ansprüchen.

Die Erfindung wird nachfolgend anhand von Ausführungsbeispielen mit Bezug auf die Zeichnung näher erläutert. Es zeigen:

Figur 1     ein linear rückgekoppeltes binäres Schieberegister mit einem Element für die diskrete Logarithmusbildung,

Figur 2     ein linear rückgekoppeltes ternäres Schieberegister mit einem Element für die diskrete Logarithmusbildung,

Figur 3     ein allgemeines linear rückgekoppeltes Schieberegister mit einem Element für die diskrete Logarithmusbildung,

Figur 4     ein linear rückgekoppeltes Schieberegister über dem Körper GF $(2^2)$ = GF (4),

Figur 5      ein linear rückgekoppeltes Schieberegister über dem Körper GF $(2^2)$ = GF (4), wobei das Element für die diskrete Logarithmusbildung im Rückkoppelzweig angeordnet ist, und

Figur 6      ein allgemeines linear rückgekoppeltes Schieberegister, welches in den Rückkoppelzweigen ein Element für die diskrete Logarithmusbildung aufweist.

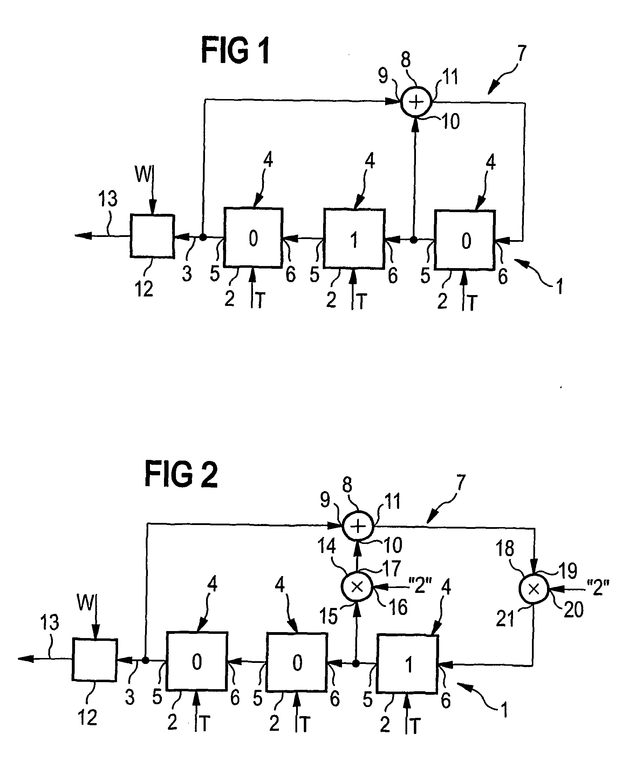

Figur 1 zeigt ein lediglich zur Illustration dienendes Beispiel einer Schieberegisterkette 1, die eine Anzahl m von in Reihe geschalteten Speicherzellen 2 aufweist. Der Eingang einer Schieberegisterstufe ist also mit dem Ausgang der vorangeschalteten Schieberegisterstufe verbunden. Die letzte Schieberegisterstufe bildet den Ausgang 3 der Kette 1, an dem die zu erzeugende Pseudozufallsfolge abgreifbar ist. Für die Erzeugung von Pseudozufallsfolgen werden in den meisten Fällen diese sogenannten linear rückgekoppelten Schieberegisterketten 1 verwendet, die in Hardware, also mit schnellen Logikbausteinen, in integrierter Form hergestellt werden können, wodurch eine sehr hohe Verarbeitungsgeschwindigkeit erzielt werden kann. Wie bereits erwähnt, zeigt Figur 1 eine derartige binäre Schieberegisterkette. Jede Schieberegisterstufe 2 wird mit einer Taktung T versorgt, so dass bei jedem Takt der am Eingang einer Schieberegisterstufe 2 anstehende Wert in die Speicherzelle 4 der jeweiligen Schieberegisterstufe 2 eingelesen wird und das vorher in der Speicherzelle 4 abgelegte Element der Pseudozufallsfolge am Registerausgang 5 bereitgestellt wird. Für die Taktung ist vorzugsweise eine zentrale Uhr vorgesehen. Der Eingang jeder Speicherzelle ist in der Figur 1 mit dem Bezugszeichen 6 versehen.

Im Rückkoppelzweig 7 der binären Schieberegisterkette 1 ist ein Verknüpfungselement 8 angeordnet, dessen Eingänge 9 und 10 mit Registerausgängen 5 verbunden sind. Der Ausgang 11 des Verknüpfungselements 8 ist mit dem Eingang 6 einer Schieberegisterstufe, vorzugsweise des Ersten, verbunden. Im gezeigten Ausführungsbeispiel ist das Verknüpfungselement eine Additionsvorrichtung, die die an den Eingängen 9 und 10 anliegenden Ausgangswerte der Register addiert, wobei gilt 0 + 0 = 0, 0 + 1 = 1 + 0 = 1 und 1 + 1 = 0 mod 2. Diese Addition modulo 2 kann besonders einfach durch ein Logikgatter ausgeführt werden, welches als Exklusiv-Oder-Gatter realisiert ist. Somit wird klar, dass bei der in Figur 1 dargestellten anfänglichen Belegung der Speicherzellen 4 der Schieberegisterkette 1 eine Pseudozufallsfolge mit den Elementen 0100111010... erzeugt werden kann. Diese Pseudozufallsfolge liegt am Ausgang 3 der Schieberegisterkette an beziehungsweise kann an diesem Ausgang 3 abgegriffen werden.

Es ist vorgesehen, dass die am Ausgang 3 bereitgestellte Pseudozufallsfolge diskret logarithmiert wird. Hierfür ist ein Logarithmierelement 12 dem Ausgang 3 nachgeschaltet, welches die diskrete Logarithmierung der Elemente der Pseudozufallsfolge durchführt. Für die diskrete Logarithmierung kann vorgesehen sein, dass ein Element der Pseudozufallsfolge mit einem anderen Element der Pseudozufallsfolge verknüpft wird. Es kann jedoch auch vorgesehen sein, dass ein Element der Pseudozufallsfolge mit einem am Element 12 anliegenden vorgebbaren Wert W verknüpft wird.

Am Elementausgang 13 liegt dann die diskret logarithmierte Pseudozufallsfolge vor. Vorzugsweise wird eine modifizierte diskrete Logarithmierung durchgeführt, das heißt, sofern ein Element der Pseudozufallsfolge den Wert 0 aufweist, wird das Element auf einen vorgebbaren Ergebniswert festgesetzt, da die Logarithmusbildung von 0 bekanntermaßen nicht möglich ist.

Ein Vorteil der linear rückgekoppelten Schieberegister 1 ist der, dass es relativ einfach ist, die Parameter zu bestimmen, um die maximal mögliche Periodenlänge der Pseudozufallsfolge zu erzielen. Als Parameter sind hier die Registerausgänge 5 anzugeben, deren Ausgangswerte in dem Verknüpfungselement 8 verknüpft werden müssen. Es muss also die Lage der Rückkopplungsanschlüsse angegeben sein, wobei auch anzugeben ist, auf welchen Registereingang 6 der Ausgang 11 des Verknüpfungselements gelegt werden muss. Eine binär linear rückgekoppelte Schieberegisterkette 1 mit der Länge m, also der Anzahl der Schieberegisterstufen 2, kann eine pseudozufällige Binärfolge erzeugen, die sich erst nach $2^m$ - 1 Bits wiederholt. Tabellen mit Rückkopplungsanschlüssen, die die maximale Periodenlänge angeben, findet man in der Literatur (zum Beispiel W. Peterson, E. Weldon, Error-Correcting Codes, second Edition, MIT Press, Cambrigde, seventh printing 1984 oder R. Lidl, H. Niederreiter, Finite Fields, Cambrigde University Press, 1984).

Selbstverständlich ist es auch möglich, anstatt der binären Schieberegisterfolgen nicht-binäre Folgen zu benutzen. Eine nicht-binäre Schieberegisterkette 1 ist in Figur 2 dargestellt. Im Unterschied zur Schieberegisterkette 1 gemäß Figur 1 ist zwischen dem Eingang 10 des Verknüpfungselements 8 und dem Registerausgang 5 ein Vorverknüpfungselement 14 zwischengeschaltet. Dieses besitzt zwei Vorverknüpfungseingänge 15 und 16 sowie einen Vorverknüpfungsausgang 17, der auf den Eingang 10 des Verknüpfungselements 8 geschaltet ist. Das Vorverknüpfungselement 14 führt in bevorzugter Ausführungsform eine Multiplikation durch. Bei der Schieberegisterkette 1 stellen also das Verknüpfungselement 8 und das Vorverknüpfungselement 14 die Addition und Multiplikation modulo 3 dar, das heißt, man führt die Addition beziehungsweise Multiplikation der Zahlen aus der Menge {0, 1, 2} durch und subtrahiert vom Ergebnis, wenn es größer als 2 ist, den Wert 3. Daraus ergibt sich am Ausgang 3 der Schieberegisterkette 1 eine Pseudozufallsfolge mit den Elementen 00111021121010022201221202 001...Diese Pseudozufallsfolge wird -wie bei der Schieberegisterkette 1 nach Figur 1- dem Logarithmierelement 12 zugeführt. Ein weiterer Unterschied besteht darin, dass im Rückkoppelzweig 7 ein weiteres Multiplikationselement 18 angeordnet ist, das identisch zum Vorverknüpfungselement 14 ausgebildet ist. Der Eingang 19 des Multiplikationselements ist mit dem Ausgang 11 des Verknüpfungselements 8 verbunden. Der zweite Eingang 20 des Multiplikationselements erhält für die Funktion modulo 2 den entsprechenden Eingangsparameter. Der Ausgang 21 des Multiplikationselements 18 ist mit dem Eingang 6 der ersten Schieberegisterstufe 2 verbunden. Im übrigen sind gleiche beziehungsweise gleich wirkende Teile wie in Figur 1 in Figur 2 mit denselben Bezugszeichen versehen.

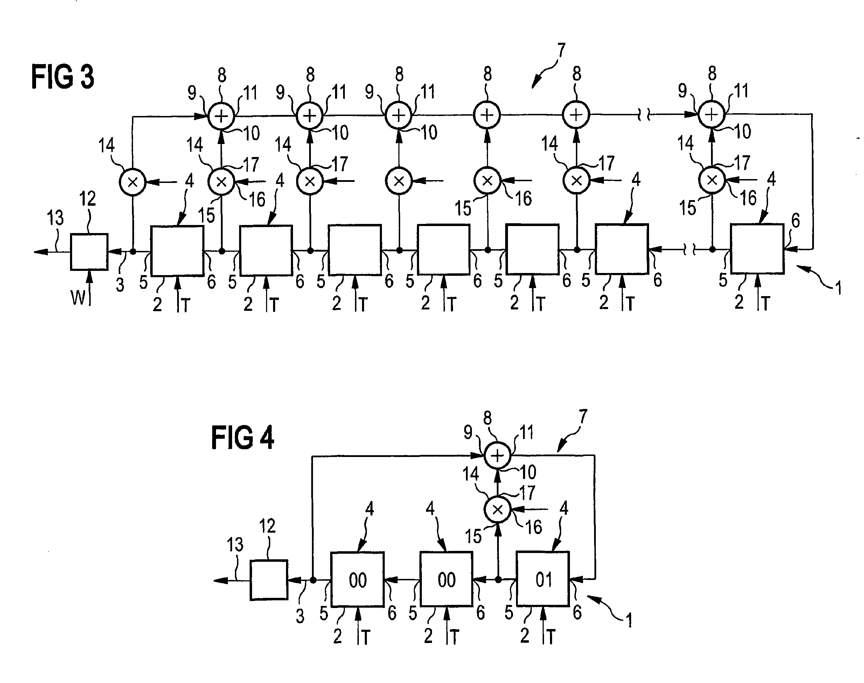

Figur 3 zeigt eine Schieberegisterkette 1, die als Alphabet GF(q) einen sogenannten binären Erweiterungskörper benutzt mit q=2$^m$. Binäre Erweiterungskörper sind vorteilhaft, da diese sehr der Datenverarbeitung in dem gängigen Binärformat entgegenkommt. Die linear rückgekoppelte Schieberegisterkette 1 hat dann die in Figur 3 dargestellte Form. Es sind hier also -wie in Figur 2- Vorverknüpfungselemente 14 vorgesehen, die jeweils zwischen dem Ausgang einer Schieberegisterstufe und dem Eingang des Verknüpfungselements 8 liegen. Wie aus Figur 3 hervorgeht, kann jeder Schieberegisterausgang 5 über ein Vorverknüpfungselement 14 und ein Verknüpfungselement 8 rückgekoppelt sein, also auf einen Eingang 6 einer anderen Schieberegisterstufe geführt werden, wobei selbstverständlich die im Zusammenhang mit Figur 1 und 2 durchgeführten Verknüpfungsoperationen in den Vorverknüpfungselementen 14 und den Verknüpfungselementen 8 durchgeführt werden. Gleiche beziehungsweise gleich wirkende Teile sind in Figur 3 mit denselben Bezugszeichen versehen wie in den Figuren 1 und 2.

Anhand von Figur 3 wird im Folgenden eine Schieberegisterkette 1 über dem Alphabet GF (q) betrachtet, wobei GF (q) einen Körper mit q = p$^m$ Elementen charakterisiert, wobei q eine Primzahlpotenz darstellt. Es zeigt sich, dass die Struktur der linear rückgekoppelten Schieberegisterstufen im Vergleich zum Stand der Technik im Wesentlichen beibehalten ist. Allerdings wird, wie in den Figuren 1 bis 4 dargestellt, die Pseudozufallsfolge durch das Mittel der geringfügig modifizierten diskreten Logarithmusbildung manipuliert, wobei die benötigten Rechenoperationen für die Logarithmusbildung in eine Zahlenmenge verlagert werden, in der die benötigten Operationen von den meisten Rechenautomaten/Prozessoren leicht durchführbar sind. Anstelle der Multiplikation in dem Vorverknüpfungselement 14 wird nun die Addition modulo p$^m$-1 und statt der Addition in dem Verknüpfungselement 8 eine entsprechende Ersatzoperation durchgeführt, wobei diese Ersatzoperation beispielsweise mit einer Tabelle durchgeführt werden kann. In dem Verknüpfungselement 8 kann also ein Speicher für eine derartige Tabelle enthalten sein, aus der in Abhängigkeit der Eingangswerte ein entsprechender Ergebniswert ausgewählt wird.

Die erhaltenen Pseudozufallsfolgen sind von den Folgen, die durch rückgekoppelte Schieberegister nach dem Stand der Technik erzeugt werden, verschieden. Aufgrund der Struktur der linear gekoppelten Schieberegisterkette lässt sich allerdings die Periodenlänge der Pseudozufallsfolge exakt bestimmen. Die Periodenlänge ist durch die Periodenlänge des unterliegenden Schieberegisters gegeben.

Nimmt man beispielsweise die in Figur 4 dargestellte Schieberegisterkette 1 mit der Anzahl m = 3 Schieberegisterstufen über dem Körper GF (2$^2$) = (00,01,10,11), so erhält man eine Pseudozufallsfolge mit der Periodenlänge 4$^3$-1 = 63. In Figur 4 sind in der Speicherzelle 4 jedes Schieberegisters 2 die einzelnen Elemente des Körpers GF dargestellt.

Damit mit den Elementen des Körpers GF gerechnet werden kann, können zum Beispiel die beiden nachfolgend aufgeführten Tabellen für die Addition und Multiplikation in diesem Körper benutzt werden. Diese Tabellen enthalten also Ausgangswerte, denen entsprechende Ergebniswerte eindeutig zugeordnet sind. Diese Tabellen sind also in den Verknüpfungselementen 8 und 14 aufruf- und abarbeitbar.

Additionstabelle

| + | 00 | 01 | 10 | 11 |
|---|----|----|----|----|
| 00 | 00 | 01 | 10 | 11 |
| 01 | 01 | 00 | 11 | 10 |
| 10 | 10 | 11 | 00 | 01 |
| 11 | 11 | 10 | 01 | 00 |

Multiplikationstabelle

| x | 00 | 01 | 10 | 11 |
|---|----|----|----|----|
| 00 | 00 | 00 | 00 | 00 |
| 01 | 00 | 01 | 10 | 11 |
| 10 | 00 | 10 | 11 | 01 |
| 11 | 00 | 11 | 01 | 10 |

Die Addition in binären Erweiterungskörpern GF ist recht einfach, nämlich eine komponentenweise Exklusiv-Oder-Verknüpfung, wohingegen die Multiplikation in Erweiterungskörpern komplizierter ist. Sie kann entweder durch spezielle Schaltungen oder mittels Tabellen durchgeführt werden.

Mit der in Figur 4 dargestellten Anfangsbelegung der Speicherzellen 4 mit 00, 00 und 01 erhält man für die Schieberegisterkette nach Figur 4 die Folge 00 00 01 11 10 00 11 00 00 11 10 01 00 10 00 00 10 01 11 01... Diese so erhaltene Pseudozufallsfolge wird -wie in den vorangegangenen Beispielen nach Figuren 1 bis 3 mittels des Elements 12 diskret logarithmiert. Auf die Beschreibung der vorangegangenen Figuren wird somit verwiesen.

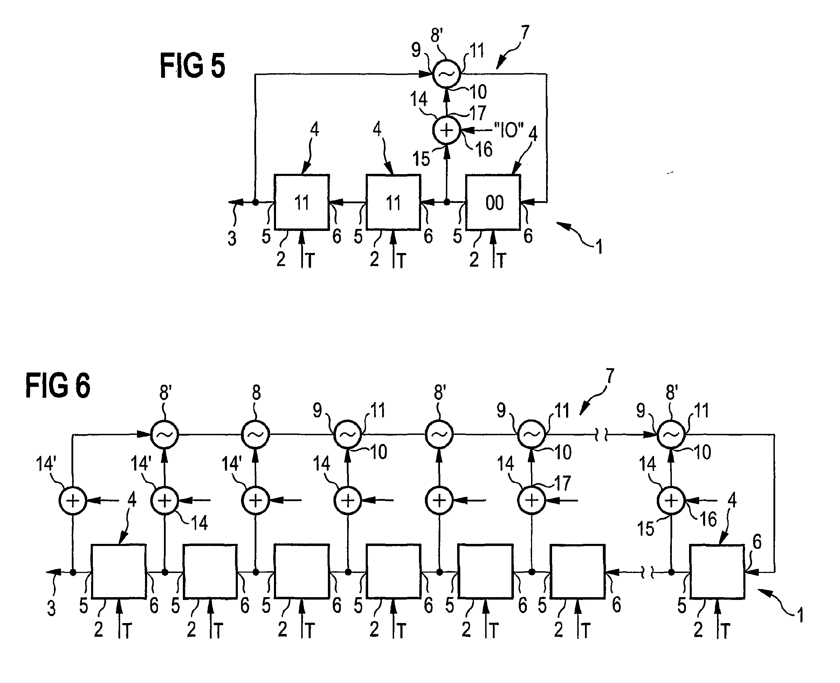

Anstelle der in den Figuren 1 bis 4 darstellten Elemente 12 für die modifizierte diskrete Logarithmusbildung am Ausgang 3 der Schieberegisterkette 1 wird im Folgenden anhand der Figuren 5 und 6 eine bevorzugte Ausführungsform von Schieberegisterketten 1 für die Erzeugung von Pseudozufallsfolgen beschrieben. Die diskrete Abbildung ist -wie bereits erwähnt- die modifizierte diskrete Logarithmusbildung, die weiter unten detaillierter erläutert wird. Der wesentliche Unterschied zu den vorstehend beschriebenen Ausführungsbeispielen besteht nun darin, die Strukturen der Schieberegisterkette 1 der linear rückgekoppelten Schieberegister 2 zu verwenden, die Verknüpfungsoperationen in den Verknüpfungselementen 8 und 14 jedoch nicht wie vorstehend beschrieben als Addition oder Multiplikation durchzuführen, sondern durch die diskrete Logarithmusbildung zu ersetzen. Das heißt, das bisher am Ausgang 3 angeschlossene Element 12 wird nunmehr in den Rückkoppelzweig 7 verlagert. Somit übernimmt das Verknüpfungselement 8 die modifizierte diskrete Logarithmierung.

Die benötigten Rechenoperationen werden in eine Zahlenmenge verlagert, in der die benötigten Operationen für die Verknüpfung von den Rechenautomaten/Prozessoren leicht durchgeführt werden können. Anstatt der Galoisfeldmultiplikation in dem Vorverknüpfungselement 14 wird im Wesentlichen die Addition modulo $p^m-1$ und anstelle der Addition im Verknüpfungselement 8 eine entsprechende Ersatzoperation ausgeführt, die beispielsweise mit Logikbausteinen oder auch mit einer Tabelle ausgeführt werden kann. Diese Ersatzoperation ist in den Figuren 5 und 6 mit dem Bezugszeichen - gekennzeichnet. Das Verknüpfungselement 8' in dem Rückkoppelzweig 7 (Figur 5) beziehungsweise die Verknüpfungselemente 8' in dem Rückkoppelzweig 7 (Figur 6) führen also die modifizierte diskrete Logarithmusbildung durch. In den Vorverknüpfungselementen 14 beziehungsweise in dem Vorverknüpfungselement 14' wird hingegen die Addition modulo $p^m-1$ ausgeführt.

Die Funktion der Schieberegisterketten 1 gemäß Figuren 5 und 6 wird im Folgenden beschrieben. Es ist bekannt, dass in einem endlichen Körper GF ($p^m$) jedes von 0 verschiedene Körperelement $\gamma$ als Potenz eines sogenannten primitiven Elementes $\alpha$ dargestellt werden kann, das heißt, als $\alpha^i$ für i = 0 ... $p^m-2$. Für das Galoisfeld GF ($2^2$) erhält man zum Beispiel

| i | $\gamma=\alpha^i$ |
|---|---|
| 0 | 01 |
| 1 | 10 |
| 2 | 11 |

Der diskrete Logarithmus für die Körperelemente $\gamma$ ist wie folgt definiert:

$$\log(\gamma) = i \text{ für } \gamma = \alpha^i, i = 0...p^m-2.$$

Fügt man noch die Modifikation log ($\gamma$) = $p^m-1$ für $\gamma$ = 0 hinzu, so erhält man die für das Wesen der Erfindung geeignete geringfügig modifizierte Definition des diskreten Logarithmus.

Für den Fall GF($2^2$) erhält man für die Elemente $\gamma$ folgende Tabelle :

| $\gamma$ | log ($\gamma$) |
|---|---|
| 00 | 11 (entspricht 3) |
| 01 | 00 (entspricht 0) |
| 10 | 01 (entspricht 1) |
| 11 | 10 (entspricht 2) |

Logarithmustabelle

In dieser Tabelle sind die ganzzahligen Werte von log($\gamma$) in Binärdarstellung wiedergegeben. Der mathematischen Korrektheit wegen sei erwähnt, dass die Logarithmusbildung auf ganzzahlige Werte führt und nicht auf Elemente des endlichen Körpers. Dies ist jedoch für die Nutzung der Elemente, also der Bits, der Pseudozufallsfolgen nicht relevant. Die eingeführte Definition für den Logarithmus von 0 führt dazu, dass die Logarithmusfunktion eine bijektive (eineindeutige) Funktion von GF $(p^m)$ auf $(0,1,...p^m-1)$ wird. Durch die Logarithmierung mit Hilfe des diskreten Logarithmus zur Basis $\alpha = 10$ wird aus der im Zusammenhang mit Figur 4 beschriebenen Pseudozufallsfolge die Folge 11 11 00 10 01 11 10 11 11 10 01 00 11 01 11 11 01 11 11 01 00 10 00 ... Diese Folge lässt sich mit der Schieberegisterkette 1 gemäß Figur 5 erzeugen.

Anstelle der Multiplikation im Galoisfeldkörper GF $(q)$ = GF $(2^2)$ hat man im Wesentlichen eine Addition modulo $2^2-1 = 3$ und anstelle der Addition im endlichen Körper die Operation - durchgeführt, die im Folgenden erklärt wird. Die Anfangsbelegung der Speicherzellen 4 gemäß Figur 4 wird mittels des diskreten Logarithmus in die Anfangsbelegung der Speicherzellen 4 von Figur 5 überführt. Das Verfahren eignet sich insbesondere für binäre Erweiterungskörper. Für rein binäre Schieberegister (Figur 1) führt es hingegen nur zu einer Vertauschung von Nullen und Einsen. In der nachfolgenden Tabelle sind die Verknüpfungen in dem Verknüpfungselement 8' Addition mod 3 und die Operation - für das Schieberegister 1 gemäß Figur 5, also für den Körper GF $(2^2)$ dargestellt.

| (+) | 00 | 01 | 10 | 11 |
|-----|-----|-----|-----|-----|
| 00 | 00 | 01 | 10 | 11 |
| 01 | 01 | 10 | 00 | 11 |
| 10 | 10 | 00 | 01 | 11 |
| 11 | 11 | 11 | 11 | 11 |

(+) Verknüpfung der Schieberegisterkette 1 gemäß Figur 5

| ~ | 00 | 01 | 10 | 11 |
|-----|-----|-----|-----|-----|
| 00 | 11 | 10 | 01 | 00 |
| 01 | 10 | 11 | 00 | 01 |
| 10 | 01 | 00 | 11 | 10 |
| 11 | 00 | 01 | 10 | 11 |

~ Verknüpfung der Schieberegisterkette 1 gemäß Figur 5

Die allgemeine Schieberegisterkette 1 für binäre Erweiterungskörper GF $(2^m)$ ist in Figur 6 dargestellt. Für die Schieberegisterkette 1 gemäß Figur 6 seien zusammenfassend nochmals die Einzelschritte wiedergegeben. Zunächst wählt man eine entsprechende Schieberegisterkette 1 gemäß Figur 3 mit Operationen über dem Körper GF$(2^m)$. Anschließend werden die Galoisfeldmultiplikationen im Wesentlichen durch eine Addition modulo $2^m-1$ ersetzt. Der Unterschied zur Addition modulo $2^m-1$ ist, dass für die All-Einsenbelegung der Ausgang 3 ebenfalls die All-Einsenbelegung am Ausgang liegt. Die GF $(2^m)$-Addition wird durch die ~ Operation ersetzt, die sich mittels Schaltlogik oder der vorstehend beschriebenen Tabellen realisieren lässt. Bei der Tabellenrealisierung kann auch der sogenannte Zech-Logarithmus beziehungsweise Jacobi-Logarithmus Anwendung finden. Um das Ergebnis der Operation ~ zu erhalten, kann man dann setzen:

$$i \sim j = j \sim i = \log(\alpha^i + \alpha^j) = i + \log \alpha^{(i-Z(i-j))} \text{ für } i > j$$

$$i \sim j = 2^m - 1 \text{ für } i = j,$$

wobei der Zech-Logarithmus durch die Gleichung $\alpha^{z(k)} = 1 + \alpha^k$ definiert ist. Für den Körper GF $(2^2)$ erhält man dann folgende Logarithmustabelle:

| i | Z(i) |
|-----|-----|
| 00 | 11 |
| 01 | 10 |

Tabelle fortgesetzt

| i | Z(i) |
|---|------|
| 10 | 10 |
| 11 | 00 |

zusammenfassend lässt sich für alle Schieberegisterketten 1 gemäß Figuren 1 bis 5 ein Verfahren zur Erzeugung von Pseudozufallsfolgen angeben. Dieses Verfahren basiert im Wesentlichen auf der modifizierten diskreten Logarithmenbildung von Schieberegisterfolgen. Die Erzeugung der Pseudozufallsfolgen erfolgt in bevorzugter Ausführungsform nicht durch die nachträgliche Logarithmenbildung (Figuren 1 bis 4), sondern in vorteilhafter Weise direkt bei der Erzeugung der Pseudozufallsfolge, wie dies in den Figuren 5 und 6 dargestellt ist. Das Verfahren ist insbesondere dann vorteilhaft, wenn die Größe des betrachteten Alphabets, also der Körper, eine Zweierpotenz ist, etwa 256, wobei sich dieses Alphabet mit Hilfe eines Bytes darstellen lässt.

**Patentansprüche**

1. Verfahren zum Erzeugen einer Pseudozufallsfolge, bei dem durch ein Schieberegister (1) mit mehreren in Reihe liegenden Speicherzellen (2) Elemente ($\gamma$) der Pseudozufallsfolge geschoben, von zumindest zwei Speicherzellen (2) die Ausgangswerte miteinander verknüpft werden und das Verknüpfungsergebnis auf einen Eingang (6) eines der Speicherzellen (2) des Schieberegisters (1) rückgekoppelt wird, **dadurch gekennzeichnet, dass** die Elemente ($\gamma$) der Pseudozufallsfolge diskret logarithmiert werden und dass die diskrete Logarithmierung bereits bei dem Verknüpfen der Ausgangswerte der Schieberegister (1) erfolgt.

2. Verfahren nach Anspruch 1, **dadurch gekennzeichnet, dass** derart modifiziert diskret logarithmiert wird, dass statt der Logarithmierung eines Elements ($\gamma$) mit dem Wert Null, ein vorgebbarer Wert gesetzt wird.

3. Verfahren nach einem der vorhergehenden Ansprüche, **dadurch gekennzeichnet, dass** die diskrete Logarithmierung mehrfach durchgeführt wird.

4. Verfahren nach einem der vorhergehenden Ansprüche, **dadurch gekennzeichnet, dass** anhand einer Ausgangs- und Ergebniswerte umfassenden Tabelle diskret logarithmiert wird.

5. Verfahren nach einem der vorhergehenden Ansprüche, **dadurch gekennzeichnet, dass** zumindest einer der miteinander zu verknüpfenden Ausgangswerte vor dieser Verknüpfung mit einem vorgebbaren Wert vorverknüpft wird.

6. Verfahren nach einem der vorhergehenden Ansprüche, **dadurch gekennzeichnet, dass** diese Vorverknüpfung eine logische Verknüpfung, vorzugsweise eine Addition, ist.

7. Verfahren nach einem der vorhergehenden Ansprüche, **dadurch gekennzeichnet, dass** anhand einer Ausgangs- und Ergebniswerte umfassenden Vorverknüpfungstabelle oder mittels Logikschaltungen die Vorverknüpfung durchgeführt wird.

8. Verfahren nach einem der vorhergehenden Ansprüche, **dadurch gekennzeichnet, dass** die diskrete Logarithmierung mit Hilfe des Zech- beziehungsweise Jacobi-Logarithmus ausgeführt wird.

9. Verfahren nach einem der vorhergehenden Ansprüche, **dadurch gekennzeichnet, dass** die Logarithmustabelle auf dem Zech- beziehungsweise Jacobi-Logarithmus basiert.

10. Verfahren nach einem der vorhergehenden Ansprüche, **dadurch gekennzeichnet, dass** die Rückkopplung so erfolgt, dass eine Pseudozufallsfolge mit maximaler Periodenlänge gebildet wird.

11. Vorrichtung zum Erzeugen einer Pseudozufallsfolge, mit einem mehrere in Reihe geschaltete Speicherzellen (2) aufweisenden Schieberegister (1), einem Rückkoppelzweig (7), der zwei unterschiedliche Registerausgänge (5) mit einem Registereingang (6) verbindet, und mit einem Verknüpfungselement (8) für die Ausgangswerte der Register (2), wobei das Verknüpfungselement (8) eingangsseitig mit den Registerausgängen (5) und ausgangsseitig mit dem Registereingang (6) verbunden ist, **dadurch gekennzeichnet, dass** ein Element (8') für die diskrete Logarithmierung der Elemente (γ) der Pseudozufallsfolge vorgesehen ist, das Element (8') im Rückkoppelzweig (7) liegt und das Verknüpfungselement (8) bildet, welches die Ausgangswerte der Registerstufen (2) diskret logarithmiert.

12. Vorrichtung nach Anspruch 11, **dadurch gekennzeichnet, dass** das Element (8') ein Speicherelement ist, in dem eine Ausgangs- und Ergebniswerte umfassende Logarithmustabelle abgelegt ist.

13. Vorrichtung nach Anspruch 11 oder 12, **dadurch gekennzeichnet, dass** zwischen einem der Registerausgänge (5) und dem Verknüpfungselement (8,8') ein Vorverknüpfungselement (14) liegt, dessen einer Eingang (15) mit diesem Ausgang (5) der Registerstufe (2), dessen anderer Eingang (16) mit einem vorgebbaren Wert beaufschlagbar ist und dessen Ausgang (17) mit dem Eingang (10) des Verknüpfungselements (8,8') verbunden ist.

14. Vorrichtung nach einem der Ansprüche 11 bis 13, **dadurch gekennzeichnet, dass** das Vorverknüpfungselement (14) eine logische Schaltung ist.

## Claims

1. Method for generating a pseudorandom sequence, where elements (γ) of the pseudorandom sequence are shifted through a shift register (1) having multiple serially connected memory cells (2), the output values of at least two memory cells (2) are combined with one another, and the result of the combination is fed back to an input (6) of one of the memory cells (2) of the shift register (1), **characterized in that** the discrete logarithm of the elements (γ) of the pseudorandom sequence is taken and **in that** the discrete logarithm is calculated when the output values of the shift register (1) are combined.

2. Method according to claim 1, **characterized in that** the process of taking the discrete logarithm is taken in a manner modified such that, instead of taking the logarithm of an element (γ) with the value zero, a predefinable value is inserted.

3. Method according to any one of the preceding claims, **characterized in that** the calculation of the discrete logarithm is performed multiple times.

4. Method according to any one of the preceding claims, **characterized in that** the discrete logarithm calculation is performed by means of a table containing output values and result values.

5. Method according to any one of the preceding claims, **characterized in that** at least one of the output values to be combined with one another is precombined with a predefinable value prior to this combination.

6. Method according to any one of the preceding claims, **characterized in that** said precombination is a logical combination, preferably an addition.

7. Method according to any one of the preceding claims, **characterized in that** the precombination is carried out with a precombination table containing output values and result values or is carried out by means of logic circuits.

8. Method according to any one of the preceding claims, **characterized in that** the discrete logarithm is calculated with the aid of the Zech logarithm or the Jacobi logarithm.

9. Method according to any one of the preceding claims, **characterized in that** the logarithm table is based on the Zech logarithm or the Jacobi logarithm.

10. Method according to any one of the preceding claims, **characterized in that** the feedback takes place in such a manner as to produce a pseudorandom sequence with maximum period length.

11. Device for generating a pseudorandom sequence, with a shift register (1) having multiple serially connected memory cells (2), with a feedback path (7) that connects two different register outputs (5) to a register input (6), and with a combining element (8) for the output values of the register (2), said combining element (8) being connected at its input side to the register outputs (5) and at its output side to the register input (6), **characterized in that** an element (8') is provided for calculating the discrete logarithm of the elements (γ) of the pseudorandom sequence, said element (8') being located in the feedback path (7) and constituting the combining element (8) that calculates the discrete logarithm of the output values of the register stages (2).

**12.** Device according to claim 11, **characterized in that** the element (8') is a memory element in which is stored a logarithm table containing output values and result values.

**13.** Device according to any one of claims 11 or 12, **characterized in that** a precombining element (14) is located between one of the register outputs (5) and the combining element (8, 8'), wherein one input (15) of said precombining element is connected to this output (5) of the register stage (2), a predefinable value can be applied to the other input (16) of said precombining element, and the output (17) of said precombining element is connected to the input (10) of the combing element (8, 8').

**14.** Device according to any one of claims 11 through 13, **characterized in that** the precombining element (14) is a logic circuit.

**Revendications**

**1.** Procédé pour produire une séquence pseudo-aléatoire, dans lequel des éléments ($\gamma$) de la séquence pseudo-aléatoire sont décalés par un registre à décalage (1) avec plusieurs cellules de mémoire (2) situées en série, les valeurs de sortie d'au moins deux cellules de mémoire (2) étant combinées entre elles et le résultat de la combinaison étant réinjecté sur une entrée (6) d'une des cellules de mémoire (2) du registre à décalage (1), **caractérisé en ce qu'**un logarithme discret des éléments ($\gamma$) de la séquence pseudo-aléatoire est calculé et **en ce que** le calcul du logarithme discret est effectué dès la combinaison des valeurs de sortie des registres à décalage (1).

**2.** Procédé selon la revendication 1, **caractérisé en ce que** le calcul de logarithme discret est modifié de telle manière que, au lieu de calculer le logarithme d'un élément ($\gamma$) avec la valeur zéro, une valeur prédéterminable est posée.

**3.** Procédé selon l'une des revendications précédentes, **caractérisé en ce que** le calcul de logarithme discret est effectué plusieurs fois.

**4.** Procédé selon l'une des revendications précédentes, **caractérisé en ce que** le logarithme discret est calculé à l'aide d'une table comprenant des valeurs de sortie et de résultat.

**5.** Procédé selon l'une des revendications précédentes, **caractérisé en ce qu'**au moins une des valeurs de sortie à combiner entre elles est précombinée avant cette combinaison avec une valeur prédéterminable.

**6.** Procédé selon l'une des revendications précédentes, **caractérisé en ce que** cette précombinaison est une combinaison logique, de préférence une addition.

**7.** Procédé selon l'une des revendications précédentes, **caractérisé en ce que** la précombinaison est effectuée à l'aide d'une table de précombinaison comprenant des valeurs de sortie et de résultat ou au moyen de circuits logiques.

**8.** Procédé selon l'une des revendications précédentes, **caractérisé en ce que** le calcul de logarithme discret est effectué à l'aide du logarithme de Zech ou de Jacobi.

**9.** Procédé selon l'une des revendications précédentes, **caractérisé en ce que** la table de logarithme est basée sur le logarithme de Zech ou de Jacobi.

**10.** Procédé selon l'une des revendications précédentes, **caractérisé en ce que** la réinjection est effectuée de manière à ce qu'une séquence pseudo-aléatoire soit formée avec une longueur de période maximale.

**11.** Dispositif pour produire une séquence pseudo-aléatoire, avec un registre à décalage (1) présentant plusieurs cellules de mémoire (2) montées en série, une branche de réinjection (7) qui relie deux sorties de registre différentes (5) à une entrée de registre (6) et avec un élément de combinaison (8) pour les valeurs de sortie des registres (2), l'élément de combinaison (8) étant relié du côté entrée aux sorties de registre (5) et du côté sortie à l'entrée de registre (6), **caractérisé en ce qu'**il est prévu un élément (8') pour le calcul du logarithme discret des éléments ($\gamma$) de la séquence pseudo-aléatoire, l'élément (8') étant situé dans la branche de réinjection (7) et formant l'élément de combinaison (8) qui calcule le logarithme discret des valeurs de sorties des étages de registre (2).

**12.** Dispositif selon la revendication 11, **caractérisé en ce que** l'élément (8') est un élément de mémoire dans lequel est déposée une table de logarithme comprenant des valeurs de sortie et de résultat.

**13.** Dispositif selon l'une des revendications 11 ou 12, **caractérisé en ce que,** entre une des sorties de registre (5) et l'élément de combinaison (8, 8'), se trouve un élément de précombinaison (14) dont une entrée (15) est reliée à cette sortie (5) de l'étage de registre (2), dont l'autre entrée (16) peut recevoir une valeur prédéterminable et dont la sortie (17) est reliée à l'entrée (10) de l'élément de combinaison (8, 8').

**14.** Dispositif selon l'une des revendications 11 à 13, **caractérisé en ce que** l'élément de précombinaison (14) est un circuit logique.

# FIG 1

# FIG 2

FIG 3

FIG 4

EP 1 342 153 B1

**FIG 5**

**FIG 6**